Europäisches Patentamt

European Patent Office

Office européen des brevets

(11) Veröffentlichungsnummer: **0 207 264**
**A1**

## (12) EUROPÄISCHE PATENTANMELDUNG

(21) Anmeldenummer: **86106499.6**

(51) Int. Cl.⁴: **H02K 23/18**

(22) Anmeldetag: **13.05.86**

(30) Priorität: **12.06.85 DE 3521038**

(43) Veröffentlichungstag der Anmeldung:
**07.01.87 Patentblatt 87/02**

(84) Benannte Vertragsstaaten:
**DE FR GB**

(71) Anmelder: **ROBERT BOSCH GMBH**
**Postfach 50**
**D-7000 Stuttgart 1(DE)**

(72) Erfinder: **Mohr, Adolf, Dr.-Ing.**
**Eichendorffweg 21**
**D-7582 Bühlertal(DE)**

(54) **Kommutatormaschine, insbesondere Kommutatormotor.**

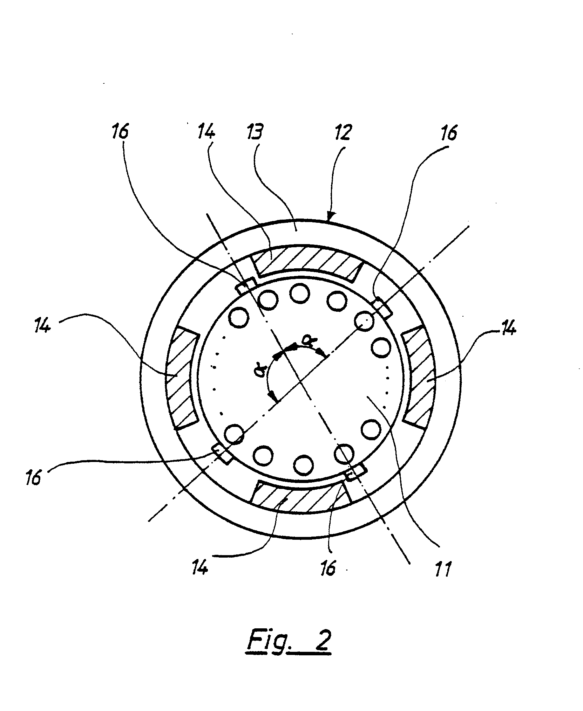

(57) Bei einer permanentmagneterregten Kommutatormaschine, insbesondere einem Kommutatormotor, ist zwecks Erzielung eines Reihenschlußverhaltens der Kommutatormaschine jede in der Reihenfolge der Kommutatorbürsten (16) zweite Kommutatorbürste (16) derart verschoben, daß der Versatzwinkel ($\alpha$) zwischen aufeinanderfolgenden Kommutatorbürsten (16) abwechselnd kleiner und größer als die Polteilung oder umgekehrt ist (Fig. 2).

*Fig. 2*

EP 0 207 264 A1

## Kommutatormaschine, insbesondere Kommutatormotor

### Stand der Technik

Die Erfindung geht aus von einer Kommutatormaschine, insbesondere einem Kommutatormotor, nach der Gattung des Anspruchs 1.

Permanentmagneterregte Kommutatormaschinen weisen im allgemeinen ein Nebenschlußverhalten auf, das sie für verschiedene Anwendungszwecke, wie z.B. als Startermotoren für Kraftfahrzeuge oder Gebläsemotoren für Staubsauger, wenig geeignet macht.

Bei einer bekannten Kommutatormaschine dieser Art (DE-OS 25 12 273) hat man zur Erzielung eines Reihenschlußverhaltens der Maschine zwischen den Permanentmagnetpolen Weicheisen-Hilfspole angeordnet und die Bürstenachsen der Kommutatorbürsten um einen Winkel aus der neutralen Zone verschoben, und zwar für den Motorbetrieb entgegen der Drehrichtung des Rotors und im Generatorbetrieb in Drehrichtung des Rotors.

Eine solche Beeinflussung der Maschinencharakteristik erfordert jedoch einen weitgehenden Eingriff in den konstruktiven Aufbau der Maschine und in den fertigungstechnischen Montageablauf.

### Vorteile der Erfindung

Die erfindungsgemäße Kommutatormaschine mit den kennzeichnenden Merkmalen des Anspruchs 1 hat demgegenüber den Vorteil, durch geringfügigen Eingriff ausschließlich in den Bürstensatz und ohne Änderungsmaßnahmen im Ständer das angestrebte Reihenschlußverhalten der Maschine zu erzielen. Infolge der durch die einseitige Bürstenverdrehung hervorgerufenen Unsymmetrie im Ankerquerfeld ist der Zusammenhang zwischen Drehmoment der Maschine und Strom in der Ankerwicklung nicht mehr proportional. Dies führt im Motorbetrieb zu einer Erhöhung der Leerlaufdrehzahl bei gleichem Anzugsmoment.

### Zeichnung

Die Erfindung ist anhand eines in der Zeichnung dargestellten Ausführungsbeispiels in der nachfolgenden Beschreibung näher beschrieben. Es zeigen:

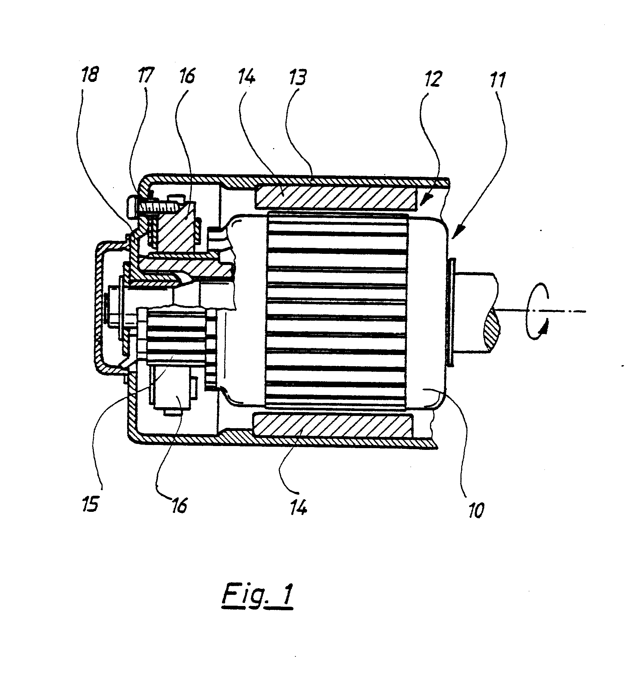

Fig. 1 eine Seitenansicht eines permanentmagneterregten Kommutatormotors, teilweise geschnitten,

Fig. 2 eine schematische Darstellung eines Querschnitts des Kommutatormotors in Fig. 1.

### Beschreibung des Ausführungsbeispiels

Der in der Zeichnung dargestellte vierpolige Kommutatormotor als Beispiel einer Kommutatormaschine weist in bekannter Weise einen eine Ankerwicklung 10 tragenden Läufer oder Rotor 11 und einen den Rotor 11 umgebender Ständer oder Stator 12 auf. Der Stator 12 besteht wie üblich aus einem Rückschlußring 13 und einer geradzahligen Anzahl 2 p von daran um gleiche Umfangswinkel (Polteilung) versetzt angeordneter Permanentmagnetpolen 14, die als schalenförmige Magnetsegmente ausgebildet sind. Im Beispiel des vierpoligen Kommutatormotors beträgt die Polpaarzahl p = 2 und die Polteilung 90°.

Mit dem Rotor 11 läuft ein mit der Ankerwicklung 10 verbundener Kommutator 15 starr um. Auf dem Umfang des hier als Trommelkommutators ausgebildeten Kommutators 15 liegen Kommutatorbürsten 16 auf, deren Anzahl gleich der Zahl der Permanentmagnetpole 14 ist. Die zu einem Bürstensatz zusammengefaßten Kommutatorbürsten 16 sind üblicherweise an einem Bürstenträger 17 gehalten, der am Gehäuse 18 des Kommutatormotors befestigt ist. Entgegen der üblichen Anordnung der Kommutatorbürsten 16 in der neutralen Zone, und zwar jeweils um eine Polteilung gegeneinander versetzt, ist hier jede in der Reihenfolge der Kommutatorbürsten zweite Kommutatorbürste derart verschoben, daß der Versatzwinkel $\alpha$ zwischen aufeinanderfolgenden Kommutatorbürsten 16 abwechselnd kleiner und größer als die Polteilung oder umgekehrt, d.h. abwechselnd größer und kleiner als die Polteilung, ist. Die Polteilung berechnet sich, wie bekannt, durch Dividieren des Vollwinkels von 360° durch die Polzahl 2 p. Damit liegt in aufeinanderfolgender Reihenfolge jeweils immer eine Kommutatorbürste 16 in der neutralen Zone, während die nächste Kommutatorbürste 16 aus der neutralen Zone verschoben ist, und zwar entgegen der Drehrichtung des Rotors 11. (Es sei angemerkt, daß bei Ausbildung der Kommutatormaschine als Kommutatorgenerator die Verschiebung der jeweiligen Bürste in Drehrichtung des Rotors erfolgt).

Durch diese elektrisch gesehen unsymmetrische Lage der Kommutatorbürsten 16 entsteht ein stark unsymmetrisches Ankerquerfeld, aus welchem wiederum ein Reihenschlußverhalten des Kommutatormotors resultiert.

## Ansprüche

Kommutatormaschine, insbesondere Kommutatormotor, mit einem eine Ankerwicklung tragenden Rotor, mit einem den Rotor umgebenden Stator, der einen Rückschlußring und eine geradzahlige Anzahl von daran um gleiche Umfangswinkel - (Polteilung) versetzt angeordneten Permanentmagnetpolen aufweist, mit einem mit dem Rotor starr umlaufenden Kommutator, der mit der Ankerwicklung verbunden ist, und mit einer der Anzahl der Permanentmagnetpole entsprechenden Anzahl von auf dem Kommutator aufliegenden Kommutatorbürsten, **dadurch gekennzeichnet,** daß in der Reihenfolge der Kommutatorbürsten (16) jede zweite Kommutatorbürste (16) derart verschoben ist, daß der Versatzwinkel ($\alpha$) zwischen aufeinanderfolgenden Kommutatorbürsten (16) abwechselnd kleiner und größer als die Polteilung oder umgekehrt ist.

_Fig._1

*Fig. 2*

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 134 475 (MITSUBISHI DENKI K.K.) * Seite 3, Zeile 25 - Seite 4, Zeile 13; Figuren 1-3 * | 1 | H 02 K 23/18 |
| | --- | | |
| A | US-A-4 507 565 (I. HAMANO) * Spalte 2, Zeile 48 - Spalte 3, Zeile 48; Figuren 1, 2 * | 1 | |
| | --- | | |
| A | EP-A-0 087 190 (SKILL NEDERLAND B.V.) * Zusammenfassung * | 1 | |
| | ----- | | |

|  |  |  | RECHERCHIERTE SACHGEBIETE (Int. Cl.4) |
|---|---|---|---|
| | | | H 02 K 23/00 H 01 R 39/00 H 02 P 7/00 |

Der vorliegende Recherchenbericht wurde für alle Patentansprüche erstellt.

| Recherchenort | Abschlußdatum der Recherche | Prüfer |
|---|---|---|
| BERLIN | 29-08-1986 | WEIHS J.A. |